# EUROPEAN PATENT APPLICATION

(11) **EP 2 743 934 A2**
(43) Date of publication of application: **18.06.2014**
(21) Application number: 13179440.6
(22) Date of filing: 06.08.2013
(51) Int. Cl.: G21F 1/10, B09B 1/00, E02D 31/00, G21F 9/36

(54) **Shielding material used for shielding of radiation and method for shielding a radiation emitted from earth surface using the shielding material**

(30) Priority: 13.12.2012 JP 2012272036
(71) Applicant: Suurie Co., Ltd., Saitama-shi, Saitama 337-0053 (JP)
(72) Inventor: Onizawa, Masao, Saitama-shi, Saitama 337-0053 (JP)
(74) Representative: Albrecht, Thomas

(57) **Abstract**

In the present invention, there is provided, as a shielding material for beta rays or gamma rays emitted from an earth surface surrounding a nuclear power plant after an accident, a rubber sheet wherein a synthetic rubber or natural rubber, each containing no vulcanizing agent is compounded with a large amount of sand iron or barite. By placing this shielding material on a radiation-contaminated earth surface, or by reversing the position of the soil of earth surface of higher radiation dose and the position of the soil beneath the earth surface, of lower radiation dose, in such a way that the above-mentioned shielding material is placed between the new upper-position soil of lower radiation dose and the new lower-position soil of higher radiation dose, the dose of radiation emitted from the earth surface can be reduced.

## Description

### Background of the Invention

### Field of the Invention

The present invention relates to a shielding material which is a rubber composition obtained by kneading or mixing natural rubber, a synthetic rubber or a mixture thereof with one member selected from sand iron, barium sulfate and zeolite, or a mixture thereof (the rubber composition contains neither vulcanizing agent nor vulcanization accelerator) and which is to be laid on the earth surface contaminated with a radioactive substance, to reduce the dose of radiation emitted from the earth surface.

The present invention also relates to a method for reducing the dose of radiation (beta rays and gamma rays) emitted from the earth surface contaminated with a radioactive substance, by reversing the position of the earth surface layer (soil and/or dead leaf) of higher radiation dose and the position of a layer beneath the earth surface layer, of lower radiation dose and placing, between the two layers, a rubber sheet (which is not vulcanized) as a shielding material (hereinafter, the rubber sheet as a shielding material is referred to simply as "rubber sheet" in some cases) to form a shielding layer against radiation.

### Description of the Prior Art

The present invention is intended to shield a radiation emitted from the radioactive atoms scattered into the living space, particularly a radiation emitted from the radioactive atoms scattered on the earth surface, or to reduce the dose of such a radiation. The present invention is not intended to shield a radiation which a radiation testing apparatus or a structure (e.g. nuclear reactor) receives.

For such a case that an earth surface as living space has been contaminated with radioactive atoms or molecules, there is currently no technical information on the way to shield the beta rays and gamma rays emitted form the atoms or molecules or to reduce the radiation doses thereof. As a matter of course, prior to March, 2011 when the Fukushima No. 1 Nuclear Power Plant caused the accident, there had been, in Japan, substantially no case in which the living space had been contaminated widely with radiation, and accordingly it had been unnecessary to consider the shielding of radiation in the living space or to conduct an experiment on the shielding of a radiation emitted from the earth surface.

As a measure for the decontamination of the living space contaminated with radioactive atoms, it is basically considered to remove the substances contaminated with the radioactive atoms. When the earth surface has been contaminated in a large area, the contaminated soil of the area need be removed. However, it is extremely difficult to find, in Japan, a place where the highly contaminated soil of earth surface can be stored for more than several tens of years. Further, when the highly contaminated soil layer has a depth of several meters, it is impossible to find a place capable of storing such soil. It is also difficult to consider an appropriate measure for the dent formed by removing the contaminated soil.

When, for example, a metallic tool used in a nuclear-related facility is contaminated with a radioactive substance at the surface, the radioactive substance on the surface is removed, for example, by blasting with a fine plastic abrasive. The radioactive substance on the surface of metal tool adheres to the abrasive and the tool is decontaminated. By incinerating the abrasive containing the radioactive substance, the radioactive substance is condensed in the incineration ash formed. A very small amount of the radioactive substance moves together with the smoke generated and is removed by the filter of incinerator.

Needless to explain, decontamination is to remove the radioactive substance which has caused contamination, and the removed radioactive substance itself is totally moved to other place. Therefore, the decontamination creates another problem of where the radioactive atom- or radioactive molecule-rich substance removed by the decontamination should be stored. When the contaminated place is an earth surface, it is unrealistic to move a contamination-free soil to the place from other place and replace the contaminated soil with the contamination-free soil.

In the decontamination operation of contaminated earth surface, after March, 2011, it has been conducted to scrape the earth surface and gather and store the scraped soil, etc. of high radiation dose at one place. The problem is that there is no further destination of such stored soil. It is extremely difficult to find a place capable of accepting such soil of high radiation dose. Even if such a place is found, the movement to the place is merely a movement of radioactive substance from one place to another place.

When a radioactive substance has been adhered to or absorbed by weeds, etc., in what way will take place the movement of the radioactive substance ? The following is a case of such movement of radioactive substance, confirmed by the present inventor.

Weeds such as reed and the like grow at the bank (near Shinmei bridge) of Shibakawa river of Kita-ward of Saitama City. In March, 2011, the bank was totally covered with weeds.

Dose of radiation was measured toward the weeds at several points of the bank on Aug. 4, 2011. The measured value was 0.23 to 0.26 µSv/H. Thereafter, the weeds were cut and there was no thick weed (i.e. reed). Dose of radiation was measured at the earth surface after the cutting and the measured value was 0.1 to 0.15 µSv/H. This indicates that the radioactive substance adsorbed on the weeds of bank remained stably in the leafs of weeds even after rains of March to August 4, 2011 and that the 0.10 to 0.15 µSv/H (which was the measured value of earth surface after the cutting) is a radiation dose of the radioactive substance stably adsorbed on the soil.

The above is a concrete case indicating that a radioactive substance moved together with weeds. The destination of the weeds is not confirmed, but it is thought that, when the weeds are incinerated, the radioactive substance is condensed in the ash of incineration. Or, when the weeds are utilized as a fertilizer, it is a movement of a substance of high radiation dose to an undesirable place. It is reported that, in 2011 to 2012, some incinerators produced ashes of high radiation dose, and these are cases in which a radioactive substance was condensed in the ash by incineration.

It can be learned from the above-mentioned case of soil and weeds that the treatment of radioactive substance by movement has a big problem. The soil of earth surface and weeds/fallen leaves can not be viewed separately from each other. Hence, it is an urgent and very important task to develop a measure for minimizing the dose of radiation emitted from the earth surface surrounding the living environment.

The main substances emitting a radiation into the living space are radioactive atoms absorbed by or adhered onto the earth surface, nearby plants or houses. In the case of wide-area (not small-area) contamination, it is impossible to conduct decontamination by the movement of contaminant to other place unless there is an extremely large earth surface area which is not inhibited by people and not contaminated. Further, such decontamination is impossible to conduct by each individual.

Accordingly, in reducing the dose of radiation emitted from the earth surface surrounding individual houses or from a school ground, with no movement of contaminant, one recommendable measure therefor is considered to be the positional reversion of upper soil layer of higher radiation dose and lower soil layer of lower radiation dose in the same earth surface or in the same school ground. With this positional reversion of soil layers, however, the radiation from the soil layer of higher radiation moved downward is not eliminated. Moreover, it is easily thought that the place of such positional reversion becomes undetectable over a long time.

Lead is in use as a radiation-shielding material for building materials used in nuclear-related facility and X-ray control facility. However, the laying on an earth surface (which is a living environment), of this lead which is designated by European Government as an environmental load substance of Restriction of Hazardous Substance (RoHS), is not recommendable, in view of the toxicity of heavy metal. Such an approach is a diffusion of second contaminant into living environment.

It is reported that, in a school swimming pool whose vicinity shows a high radiation dose, the pool is being used by laying an iron sheet around the pool. The iron sheet is certainly a safe material; however, in assuming that the period of shielding is several tens of years or more than 100 years, there is no answer for prevention of buried iron sheet from rusting and resulting destruction. Large-scale adoption of iron sheet as a shielding material for the earth surface of living space is not worth investigation, in view of iron as a resource or or industrial production steps of iron.

A concrete-made shielding material is in use as a building material for nuclear-related facility or X-ray control facility. If a large layer of concrete is formed underground as a shielding material for the contaminated earth surface of living space, there arises a serious problem. That is, when the underground need be dug later, it is difficult to destroy the concrete layer. This difficulty applies also to the case of using an iron sheet.

For shielding the radiation emitted from the earth surface of living space or for treating the soil of high radiation dose, there is no acceptable answer with conventional techniques. Since there is no experience of treatment of the contamination of living space, there is no sufficient answer with conventional techniques.

### Summary of the Invention

### Problems to be solved by the Invention

In view of the difficulty in shielding the radiation emitted from the earth surface of living space by conventional techniques, the problems of the present invention are as follows. The first aim of the present invention is to conduct the shielding of earth surface to be decontaminated, without moving the soil to other place. The second aim of the present invention is to minimize the radiation emitted from the radioactive atoms adsorbed on the earth surface of living space. The third aim of the present invention is to use, for carrying out the first and second aims, a shielding material which hardly causes secondary contamination. The reason is that the shielding material is not used temporarily but is used over a long period in the living space. The fourth aim of the present invention is to use, as raw materials for shielding material, those which are easily and sufficiently available in Japan. The fifth aim of the present invention is to be able to conduct the work for radiation shielding easily.

### Means for Solving the Problems

The above-mentioned aims of the present invention can be achieved by
a rubber sheet as a shielding material (the sheet is hereinafter referred to simply as "rubber sheet" in some cases) for reducing the dose of radiation (e.g. beta rays and gamma rays) emitted from the earth surface of living space contaminated with a radioactive substance, which rubber sheet is obtained by compounding natural rubber, a synthetic rubber or a mixture thereof, with one member selected from sand iron, barium sulfonate and zeolite or a mixture thereof and which rubber sheet contains no vulcanizing agent, and
a method for reducing the dose of radiation (e.g. beta rays and gamma rays) emitted form the earth surface of living space contaminated with a radioactive substance, by placing, between the two rubber sheets mentioned above, one member selected from sand iron, barium sulfonate and zeolite or a mixture thereof.

The present invention is shown in detail below.
1. A natural rubber sheet as a shielding material, to be placed on a radioactive substance-contaminated earth surface or underground to shield the radiation of beta rays and gamma rays emitted from the earth surface or underground, which rubber sheet is obtained by compounding or mixing a composition containing natural rubber and also containing sand iron, barium sulfate, zeolite or a mixture of at least two of these members and which rubber sheet contains neither vulcanizing agent nor vulcanization accelerator.
2. A synthetic rubber sheet as a shielding material, to be placed on a radioactive substance-contaminated earth surface or underground to shield the radiation of beta rays and gamma rays emitted from the earth surface or underground, which rubber sheet is obtained by compounding or mixing a composition containing a synthetic rubber and also containing sand iron, barium sulfate, zeolite or a mixture of at least two of these members and which rubber sheet contains neither vulcanizing agent nor vulcanization accelerator.
3. A synthetic rubber sheet according to above 2, wherein the synthetic rubber is polyisoprene rubber, isoprene-isobutylene rubber, ethylene-propylene rubber, styrene-butadiene rubber or a mixture of at least two of these members.
4. A natural rubber sheet according to above 1, which is obtained by compounding or mixing a composition containing 100 parts by weight of natural rubber and 100 to 300 parts by weight of sand iron, barium sulfate, zeolite or a mixture of at least two of these members.
5. A rubber sheet as a shielding material, to be placed on a radioactive substance-contaminated earth surface or underground to shield the radiation of beta rays and gamma rays emitted from the earth surface or underground, which rubber sheet is obtained by compounding or mixing a composition containing
   total 100 parts by weight of a rubber component obtained by mixing 50 parts by weight to less than 100 parts by weight of natural rubber and 0 part by weight to less than 50 parts by weight of at least one synthetic rubber member selected form the synthetic rubbers set forth in above 3, and
   100 parts by weight to 300 parts by weight of sand iron, barium sulfate, zeolite or at least two of these members,
   and which rubber sheet contains neither vulcanizing agent nor vulcanization accelerator.
6. A synthetic rubber sheet according to above 2, which is obtained by compounding or mixing a composition containing
   100 parts by weight of a synthetic rubber which is at least one synthetic rubber selected from the synthetic rubbers set forth in above 3, and
   100 parts by weight to 300 parts by weight of sand iron, barium sulfate, zeolite or at least two of these members.
7. A rubber sheet according to above 1, 2, 3, 4, 5 or 6 wherein the sand iron is a fine powder of titanomagnetite, ferrotitanium ore, or a mixture thereof.
8. A rubber sheet according to above 1, 2, 3, 4, 5, 6 or 7 wherein the barium sulfate is a barite powder obtained by grinding barite, precipitated barium sulfate or a mixture thereof.
9. A rubber sheet according to above 1, 2, 3, 4, 5, 6, 7 or 8 wherein the zeolite is hydrous aluminum silicate and is a powder of an ore mainly composed of mordenite zeolite, clinoptilolite zeolite, or a mixture thereof.
10. A rubber sheet according to any of above 1 to 9 which has a thickness of 3 mm to 35 mm.
11. A method for shielding a radiation of beta rays and gamma rays emitted from the radioactive substance-contaminated earth surface in the vicinity of living environment, which comprises
   preparing two rubber sheets set forth in any of above 1 to 9,
   placing, between the two rubber sheets, a layer of sand iron, barium sulfate, zeolite, or a mixture of at least two of these members, to prepare a shielding layer, and
   reversing the position of the soil of earth surface contaminated with a radioactive substance and the position of the soil beneath the earth surface, of lower radiation dose, in such a way that the shielding layer is placed between the new upper-position soil of lower radiation dose and the new lower-position soil of higher radiation dose.
12. A method according to above 11, wherein the layer of sand iron, barium sulfate, zeolite or a mixture of at least two of these members, placed between the two rubber sheets has a thickness of 10 mm to 100 mm.
13. A method for shielding a radiation of beta rays and gamma rays emitted from a radioactive substance-contaminated earth surface in the vicinity of living environment, which comprises
   preparing two rubber sheets each containing neither vulcanizing agent nor vulcanization accelerator, obtained by kneading or mixing a composition which contains 100 parts by weight of natural rubber, at least one kind of synthetic rubber set forth in above 3, or a mixed rubber of natural rubber and at least one kind of synthetic rubber set forth in above 3, (1) more than 0 part by weight to 100 parts by weight or less of sand iron, barium sulfate, zeolite or at least two of these members, and (2) 100 parts by weight to 300 parts by weight of calcium carbonate, clay, talc, mica or at least two of these members,
   placing, between the two rubber sheets, a layer of sand iron, barium sulfate, zeolite, or a mixture of at least two of these members, to prepare a shielding layer, and
   reversing the position of the soil of earth surface contaminated with a radioactive substance and the position of the soil beneath the earth surface, of lower radiation dose, in such a way that the shielding layer is placed between the new upper-position soil of lower radiation dose and the new lower-position soil of higher radiation dose.
14. A method according to above 13, wherein the rubber sheet has a thickness of 3 mm to 35 mm.
15. A rubber sheet according to any of above 1 to 14, wherein neither rubber-vulcanizing agent selected from sulfur, sulfur compounds, organic peroxides, phenolic resins and nitroso compounds, nor rubber vulcanization accelerator selected from guanidine compounds, aldehyde compounds, thiazole compounds and thiuram compounds is not used in compounding or mixing.

### Brief Description of the Drawing

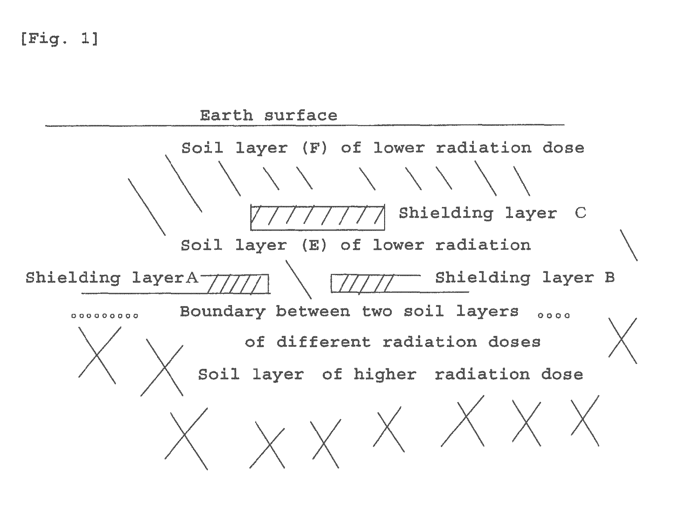

Fig. 1 is a drawing showing a case in which the rubber sheet of the present invention is placed underground as a shielding layer for radiation.

### Embodiments for carrying out the Invention

The present invention provides a rubber sheet as a shielding material, to be placed on a radioactive substance-contaminated earth surface or underground to shield the radiation of beta rays and gamma rays emitted from the earth surface or underground, which rubber sheet is obtained by compounding or mixing a composition containing natural rubber or a synthetic rubber and also containing sand iron, barium sulfate, zeolite or a mixture of at least two of these members and which rubber sheet contains neither vulcanizing agent nor vulcanization accelerator. The rubber sheet can reduce the dose of radiation (e.g. beta rays and gamma rays) emitted from a radiation-contaminated earth surface.
The natural rubber used in the present invention is a rubber-like high-molecular substance obtained from a natural plant and is chemically cis-1,4-polyisoprene. The synthetic rubber used in the present invention includes polyisoprene rubber (IR), isoprene-isobutylene rubber (butyl rubber), ethylene-propylene rubber and styrene-butadiene rubber. The polyisoprene rubber (IR) is a known general-purpose rubber which is chemically cis-1,4-polyiroprene. The isoprene-isobutylene rubber (butyl rubber) is produced by copolymerization of isoprene and isobtylene and is a known synthetic rubber having an unsaturation degree of 0.5 mol % to 50 mol %. Chlorinated isoprene-isobutylene rubber is called chlorinated butyl rubber (Cl-IIR), brominated isoprene-isobutylene rubber is called brominated butyl rubber (Br-IIR), and they are both known rubbers. The ethylene propylene rubber is a synthetic terpolymer (EPDM) of ethylene, propylene and diene, which contains a synthetic rubber (EPM) obtained by copolymerization of ethylene and propylene and, as an unsaturated component, ethylidene norbornene. This rubber is known, wherein the content of ethylidene norbornene is generally 5 mol % to 30 mol % in terms of iodine value and the content of propylene is 8 mol % to 50 mol %. The styrene-butadiene rubber is a copolymer synthetic rubber (SBR) of styrene and butadiene and is a known generla-purpose rubber.

Rubber, when used in existing applications, is vulcanized using sulfur, a sulfur compound or an organic peroxide as a vulcanizing agent and also a vulcanization accelerator, and then processed into a final product. The product includes automotive tire, rubber vibration insulator, roofing sheet, etc. The rubber product is, as its biggest feature, an elastomer having, owing to the vulcanization, resilience after deformation.

The vulcanized rubber, when used in the present invention, shows defects. Firstly, two vulcanized rubber sheets do not adhere to each other without using an adhesive. Secondly, the vulcanized rubber does not easily follow the unevenness of earth surface when laid thereon (this is a property required for the vulcanized rubber). The rubber used in the present invention is required to follow the shape of the soil on which the rubber is to be laid. In the present invention, an unvulcanized rubber is used per se and satisfies the requirement. Thirdly, it is not acceptable to use the chemicals used in vulcanization, in the rubber sheet of the present invention. The additives currently used in rubber are known to be highly safe; however, it is desired that synthetic organic chemicals are not used in the rubber sheet of the present invention because the rubber sheet of the present invention is laid on an earth surface surrounding the living space and is left there over a long period. Fourthly, even when the rubber sheet used to achieve the task of the present invention and the inorganic materials (for shielding) placed between two of such rubber sheets contain the same substance, if a vulcanized rubber is used in the rubber sheet, there is no sufficient compatibility between the rubber sheet and the inorganic materials placed between the two rubber sheets, making it impossible to form a shielding layer of stable structure.

The aim of the present invention is achieved by using an unvulcanized rubber sheet. With the tackiness of the unvulcanized rubber sheet, fine-particle substances can be kept in a stable state and can be compounded in a rubber composition. When the unvulcanized rubber sheet of the present invention is laid on an earth surface in a desired size allowing for laying operation, two such rubber sheets can be adhered to each other without using any adhesive. When laid on an uneven earth surface, the unvulcanized rubber sheet of the present invention deforms so as to match the unevenness of the earth surface contacts with the soil, and can retain the boundary surface. When a powder substance is placed between two of the rubber sheets of the present invention, it is possible to form a stable shielding layer in the soil.

The unvulcanized rubber further has a big advantage of being not deteriorated over 50 years. The experiment on this is reported, in detail, on page 411 of "Applied Rubber Chemistry No. 12" (published by Taiseisha, Sept. 20, 1977, first print, written by Hideo Kaneko). Butyl rubber and ethylene-propylene rubber, when unvulcanized, contains a low degree of unsaturation and are presumed to retain the properties for more than 50 years. The present inventor has used unvulcanized butyl rubber in an outdoor passage for more than 10 years with no quality deterioration. While cost and time are required for vulcanization in producing a vulcanized rubber product, the rubber used in the present invention requires no vulcanization step and is low in production cost.

With the rubber material used in the present invention, unlike plastics, a large amount of inorganic fillers can be mixed thereinto. The rubber sheet obtained retains flexibility and can follow the unevenness of earth surface. Therefore, the present rubber sheet exhibits a striking effect as a flexible shielding material.

In the present invention, the sand iron filled into an unvulcanized rubber includes titanomagnetite ore and ferrotitanium ore. The titanomagnetite ore is a fine powder mainly composed of magnetite (Fe₃O₄) and ulvöspinel (Fe₂TiO₄) , and the ferrotitanium ore is a fine powder mainly composed of hematite (Fe₂O₃) and ilmenite (FeTiO₃)

The sand iron produced in a titanomagnetite ore site is called true sand iron, and the sand iron produced in a ferrotitanium ore site is called red iron sand. Besides, the iron sand is called, in some cases, river sand iron, beach sand iron or sand iron of the Tertiary period layer, depending upon the site of production. The sand iron used in the present invention may be any of these or a mixture of at least two of these.

In the present invention, the zeolite filled into an unvulcanized rubber is a hydrous aluminosilicate and a powder of an ore mainly composed of mordenite zeolite and clinoptilolite zeolite.

Sand iron and barium sulfate are used as aggregates for shielding concrete, in some cases. However, according to the survey by the present inventor on rubber applications, no technical report is found on the compounding of an unvulcanized rubber with inorganic powder(s) to make a rubber sheet and the laying of the rubber sheet on a radiation-contaminated earth surface as a radiation-shielding material. Zeolite is in use, for its property of ion exchange, as a deodorant filler in rubber, an adsorbent, a soil improver, a water-quality improver, etc. However, according to the survey by the present inventor on rubber applications, no technical report is found, either, on the mixing of a large amount of zeolite into an unvulcanized rubber to make a rubber sheet for use as a radiation-shielding material.

In the present invention, it is important that the above-mentioned three inorganic substances (sand iron, zeolite and barium sulfate) are each used in the form of powder, and their properties as powder are exhibited effectively in their combination with an unvulcanized rubber. They can be mixed with an unvulcanized rubber in any desired proportions and the resulting rubber sheet can be placed underground as a layer of given thickness. When the powder(s) is (are) placed between two rubber sheets of the present invention, the thickness of the powder(s) may be appropriately controlled depending upon the level of radiation dose.

The raw materials used in the rubber sheet of the present invention need be highly safe and available easily (in abundance), because the present invention is intended to reduce the dose of radiation emitted from a contaminated earth surface in the vicinity of daily life.

As a matter of course, it is not appropriate to lay a lead sheet underground, an iron sheet on an earth surface, or a shielding concrete layer underground.

In the present invention, the property of sand iron, barium sulfate or zeolite each used as a powder, when mixed with an unvulcanized rubber, can be effectively utilized. The powder can be mixed with the rubber in any proportion and can retain a desired layer thickness. When the powder is placed between two rubber sheets of the present invention, the thickness of the powder may be appropriately controlled depending upon the level of radiation dose.

In the present invention, 100 parts by weight to 300 parts by weight of one member selected from sand iron, barium sulfate and zeolite or a mixture thereof is filled into 100 parts by weight of natural rubber, a synthetic rubber or a mixture thereof. 100 parts by weight of a later-described inorganic filler, i.e. calcium carbonate, clay, talc or mica, or a mixture of at least two of these members may also be filled. Also, 10 parts by weight or less, preferably 5 parts by weight or less of a plasticizer (diethyl phthalate or dibutyl phthalate, approved by FDA) or a naphthenic oil free from aromatic component may be added to improve the sheeting property of rubber sheet to be produced.

In laying the rubber sheet of the present invention outdoors on an earth surface, 10 parts by weight or less of carbon black may be added and it can be used with no adverse effect on the shielding material of the present invention. There is no need of adding an anti-oxidant or a stabilizer, and this is important to minimize the addition amount of organic chemicals added to the rubber used.

The thickness of the rubber sheet as a shielding material may be determined as desired, depending upon the ability of the calender roll or sheeting machine used, but is preferably 3 mm to 35 mm. When the rubber sheet is laid on an earth surface as a shielding material, a plurality of sheets may be piled depending upon the level of radiation dose to be shielded. The rubber sheet which is not vulcanized, may be easily piled, allowing for natural integration of piled sheets and adjustment into a desired thickness. A desired thickness may be selected so as to match the dose of radiation to be shielded.

Once a radiation is emitted into the air, the area of the living space needing decontamination is too wide; even if there is an established technique capable of removing a radioactive substance from contaminated earth surface (including weeds), the amount of the contaminated soil to be treated is extremely large; and the storage of removed substance of high radioactivity becomes a big problem.

Therefore, in the present invention, there is provided a method which comprises (1) interchanging the contaminated soil of earth surface with the lower soil of lower radiation dose in such a way that an intermediate layer using the present rubber sheet is placed between the new upper soil of lower radiation dose and the new lower soil (original earth surface soil) of higher radiation dose and thereby (2) shielding the beta rays and gamma rays emitted from the earth surface in the vicinity of living environment to reduce the radiation dose emitted therefrom. In this shielding method, there is no movement of soil from the contaminated place to other place. The intermediate layer is formed by placing, between two rubber sheets (of high flexibility) of the present invention, either of sand iron and barium sulfate or a mixture thereof (these are the same materials as used in the rubber sheet of the present invention). Since the upper soil layer and the lower soil layer are reversed, there is no movement of contaminated soil to other place. The operation of placing a powder of sand iron, barium sulfate (barite) or zeolite between two rubber sheets of the present invention is easy. The same is true also when a mixed powder is used.

When a powder as an inorganic filler is placed between two rubber sheets of the present invention, water may be added to the powder, followed by mixing, and the resulting mixture may be used. In particular, when water is added to barite, followed by mixing, the resulting mixture is highly viscous; the mixture can be easily coated on a rubber sheet of the present invention placed on an oblique slope (not on a horizontal surface) as in the case of coating a mortar; and another rubber sheet of the present invention can be placed thereon. When barite is used together with sand iron (weight ratio of barite to sand iron is 20 to 40%), the sand iron also becomes viscous, making easy the placement of an shielding layer

When the shielding layer is placed on an earth surface, it is extremely important that the flow of rainwater is not affected thereby. The presence of a shielding layer which prevents rainwater penetration into underground, is not allowed. In shielding a radiation using the rubber sheet of the present invention, the rubber sheet is flexible and, therefore, a shielding layer using the present rubber sheet can be placed so as to allow natural penetration of rainwater into underground. Such placement is realized by employing a placement method of Fig. 1 which uses a plurality of shielding layers.

Shielding layers A and B are placed on a soil layer of higher radiation dose. They are placed apart by a given distance from each other (the distance enables penetration of rainwater). Then, a soil layer (E) of lower radiation dose is placed on the two shielding layers A and B. Thereafter, a shielding layer C is placed above the distance between the two shielding layers A and B. Thereon is placed a soil layer (F) of lower radiation dose which becomes an earth surface. In this operation, the distance between shielding sheets (rubber sheets) can be easily conducted because each rubber sheet is flexible, whereby rainwater can be passed between the shielding layer C and the shielding layers B and C or between the shielding layer A and the shielding layer B.

The soil constituting the earth surface is a mixture of inorganic substances and organic substances, such as volcanic ash, sand, humus and the like. Therefore, radioactive atoms are adsorbed on the soil and continue to emit a radiation at a stable level. The radiation dose of the soil contaminated with radioactive atoms was periodically measured since the accident of Fukushima No. 1 Nuclear Power Plant, exactly, since April, 2011. The result was that the radiation dose of the soil from which weeds and dead leaves had been cut off, was constant. The period of measurement was 20 months after the accident. During the 20 months, there were two times of rainy periods and, besides, there were rainfalls of many times; and the earth surface was washed by rainwater. Nevertheless, the radiation dose was constant. This indicates that radioactive atoms remained stably in the soil.
The above fact indicates that, even when the position of the upper soil of higher radiation dose and the position of the lower layer of lower radiation dose are reversed, that is, the former soil layer is placed beneath the latter soil layer, there is little possibility that the underground water is contaminated and the positional reversion of the upper soil layer and the lower soil layer, both of earth surface, proposed by the present invention is an effective measure.

When a shielding powder is placed between two rubber sheets of the present invention and when the shielding powder has a large thickness and accordingly shows a high shielding effect, these rubber sheets may contain an inorganic filler of slightly lower shielding effect. However, it is requisite that such rubber sheets contain neither vulcanizing agent nor vulcanization accelerator.

The main purpose of this case is to allow the shielding layer (two rubber sheets and a shielding powder placed between them) to retain a flexible shape against the soil.

There are provided, by the present invention,
a rubber sheet for shielding the beta rays and gamma rays emitted from a radioactive substance-contaminated earth surface around living environment, which rubber sheet is obtained by kneading (mixing) a composition containing 100 parts by weight of natural rubber, at least one synthetic rubber selected from the synthetic rubbers of Claim 3, or a mixture thereof and also containing, as inorganic fillers, 100 parts by weight or less of sand iron, barium sulfate or a mixture thereof and 100 parts by weight to 300 parts by weight of at least one member selected form calcium carbonate, clay, talc, mica and zeolite, and
a shielding method using the above rubber sheet.

The calcium carbonate used as an inorganic filler includes heavy calcium carbonate and precipitated calcium carbonate. The heavy calcium carbonate is obtained by finely grinding crude limestone and the precipitated calcium carbonate is obtained by firing fine dense limestone to form quick lime and making an additional treatment and is classified, depending upon the particle size, into very fine calcium carbonate, light calcium carbonate, etc. Any calcium carbonate may be used in the present invention. The clay is composed mainly of hydrous aluminum silicate but differs in composition depending upon its place of origin. Georgia State and South Carolina State of U.S.A are famous places of origin. Also, agalmatolite composed mainly of pyrophillite, produced in Shokozan of Hirosima Prefecture may be regarded as the clay of the present invention. The talc is also called soapstone or steatite and is composed mainly of hydrous magnesium silicate. Each of these inorganic fillers is known as an inorganic filler for rubber; however, there is no technical information which teaches that, as in the rubber sheet of the present invention, these inorganic fillers are used in a unvulcanized rubber in a large amount as a material for shielding a radiation. These inorganic fillers have no risk of causing secondary public hazard when scattered on the earth surface and are available in abundance. The zeolite also used an inorganic filler is an inorganic powder composed mainly of silicon dioxide and is obtained from mordenite and clinoptilolite.

When the zeolite is used in a large amount in the present rubber sheet (the rubber sheet becomes thick), the shielding effect of zeolite for radiation can be confirmed. However, in the present invention, the zeolite is effectively used as an inorganic filler, as in Claim 13. It was confirmed that the zeolite, when filled into an unvulcanized rubber in a large amount, imparts adhesivity. Therefore, the zeolite is most suitably used as a filler in the rubber sheet of the present invention which is used when an inorganic shielding powder is placed between two such rubber sheets. The zeolite enables production of good rubber sheet of the present invention.

### Examples

The present invention is described in more detail below by way of Examples and Comparative Examples.

In Examples and Comparative Examples, there was used, as a measurement apparatus for radiation dose, RAM GENE-1 Model MARK-II produced by Rotem Industries Ltd. of Israel. When the unit of measurement was CPM, each CPM value shown in Examples and Comparative Examples is a value obtained by subtracting 50 CPM (background value of measurement apparatus) from the actually measured CPM value. When the unit of measurement was µSv/H, each µSv/H value shown in Examples and Comparative Examples is an actually measured value itself because the specification of measurement apparatus gives no background value.

### Example 1, Comparative Examples 1 and 2

100 parts by weight of butyl rubber and 250 parts by weight of barite were compounded using an open roll to produce a rubber sheet of 18 mm in thickness as a shielding material. In Example 1, this sheet was placed on the earth surface of measurement site and a measurement was made thereon. In Comparative Example 1, a measurement was conducted at the same position as in Example 1 without using the rubber sheet. In Comparative Example 2, a measurement was conducted in other measurement site of different radiation dose without using the rubber sheet, for comparison.

**Table 1-1**

| | Formulation of rubber sheet |
|---|---|
| Butyl 268 (1) | 100 parts by weight |
| Barite (2) | 250 parts by weight |

**Table 1-2**

| | Example 1 (4) | Comparative Example 1 (5) | Comparative Example 2 (6) |
|---|---|---|---|
| Measured radiation dose (3) (unit: CPM) | 85-109 | 201-243 | 0-12 |

### Notes

(1) Butyl 268 produced by Japan Butyl Co., Ltd.
(2) Barite BC produced by Sakai Chemical Industry Co., Ltd.
(3) A value obtained by subtracting 50 CPM (background value).
(4) and (5)
   Measurement site: Precincts of Sumiyoshi Shrine (Sumiyoshi, Oonami, Fukushima City) Northwest and 55 km from Fukushima No. 1 Nuclear Power Plant
   Measurement date: Nov. 22, 2012
(6) Measurement site: Precincts of Arai Shrine (Ina City, Nagano Prefecture) Southwest and 330 km from Fukushima No. 1 Nuclear Power Plant
   Measurement date: Nov. 29, 2012

In Example 1 and Comparative Example 1, measurements were conducted at the same position of the precincts with the measurement face directed perpendicularly to the earth surface. In Comparative Example 1, no shielding material was used. In Comparative Example 2, a measurement was conducted at the earth surface of a prefecture distant from the measurement site of Example 1 and Comparative Example1, using no rubber sheet. It is clear from the test results that the rubber sheet containing barite shielded the radiation dose emitted from earth surface by about 60% (CPM unit). In the measurement of Comparative Example 2 conducted at a different site, the measurement dose was extremely low and is about the same as the background value. The measurement site of Comparative Example 2 can be said a site of no contamination.

### Example 2, Comparative Example 3

70 parts by weight of butyl rubber, 30 parts by weight of EPDM and 200 parts by weight of sand iron were compounded using an open roll to produce a rubber sheet (the formulation is shown in Table 2-1) of 16 mm in thickness as a shielding material. In Example 2, this sheet was placed on the earth surface of measurement site and a measurement was made thereon. In Comparative Example 3, a measurement was conducted at the same position as in Example 2 using no rubber sheet

**Table 2-1**

| | Formulation of rubber sheet |
|---|---|
| Butyl 268 (1) | 70 parts by weight |
| EP 33 (2) | 30 parts by weight |
| Sand iron (3) | 200 parts by weight |

**Table 2-2**

| | Example 2 (5) | Comparative Example 3 (6) |
|---|---|---|
| Measured radiation dose (4) (unit: CPM) | 98∼119 | 153-208 |

### Notes

(1) Same as (1) of Example 1
(2) An ethylene-propylene rubber containing ethylidene norbornene as a diene component and having an iodine value of 26.0, produced by Japan Synthetic Rubber Co., Ltd.
(3) A sand iron for experiment, marketed by Kajidai Tekkosha.
(4) A value obtained by subtracting 50 CPM (background value).
(5) And (6)
   Measurement site: Precincts of Sumiyoshi Shrine (Sumiyoshi, Oonami, Fukushima City) Northwest and 55 km from Fukushima No. 1 Nuclear Power Plant That is, the measurement was conducted in the same precincts as in Example 1 and Comparative Example 1 but at a different place.
   Measurement date: Nov. 22, 2012

It is clear from Example 2 and Comparative Example 3 that a rubber sheet containing sand iron has a shielding effect. A rubber sheet containing sand iron can be placed on an earth surface in a state in which sand iron particles are stable owing to the property of the unvulcanized rubber used. A dose of radiation can be reduced with no mixing of sand iron and soil.

### Example 3 and Comparative Example 4

100 parts of natural rubber, and zeolite, sand iron and barite of amounts shown in Table 3-1 were kneaded using an open roll to produce a rubber sheet of 14 mm in thickness as a shielding material. In Example 3, this rubber sheet was placed on an earth surface and a radiation dose was measured thereon. In Comparative Example 4, a measurement was made using no rubber sheet. The results are shown in Table 3-2.

**Table 3-1**

| | Formulation of rubber sheet |
|---|---|
| Natural rubber #3 | 100 parts by weight |
| Zeolite (1) | 150 parts by weight |
| Sand iron (2) | 75 parts by weight |
| Barite (3) | 5 parts by weight |

**Table 3-2**

| | | Example 3 (5) | Comparative Example 4 (6) |
|---|---|---|---|
| Measured radiation dose (4) | | 98∼121 | 231-275 |
| | Unit: CPM | 0.38~0.41 | 0 53∼0.60 |
| | Unit: µSv/H | | |

(1) Zeolite #70 of Nitto Funka Kogyo Co., Ltd.
(2) Same as (3) of Example 2
(3) Same as (2) of Example 1
(4) A value obtained by subtracting 50 CPM (background value).
(5) and (6)
   Measurement site: Precincts of Sumiyoshi Shrine (Sumiyoshi, Oonami, Fukushima City) Northwest and 55 km from Fukushima No. 1 Nuclear Power Plant
   Measurement date: Dec. 6, 2012

It is clear that the rubber sheet containing a barite powder, a zeolite powder and sand iron particles can reduce a radiation dose emitted from an earth surface. As in Examples 1 and 2, these powders and particles can be used in an unvulcanized rubber sheet as a shielding material.

### Examples 4 and 5, Comparative Example 5

A formulation of Table 4-1 was compounded using an open roll to produce a rubber sheet of 9 mm in thickness. Sand iron or barite was placed in a thickness of 18 mm, as an intermediate material, between two of the produced rubbers. In Examples 4 and 5, this combined shielding material was placed on an earth surface and a radiation dose was measured thereon. In Comparative Example 5, the measurement of radiation dose was made without using the combined shielding material. The results are shown in Table 4-3.

**Table 4-1**

| | Formulation of rubber sheet |
|---|---|
| Butyl 268 (1) | 100 parts by weight |
| Barite (2) | 30 parts by weight |
| HYK talc (3) | 100 parts by weight |
| Calcium bicarbonate (4) | 70 parts by weight |

| Table 4-2 | |
|---|---|
| Intermediate material placed between two rubber sheets | |
| Example 4 | Example 5 |
| Sand iron (5) | - |
| - | Barite (2) |

**Table 4-3**

| | Example 4 | Example 5 | Comparative Example 5 |
|---|---|---|---|
| Measured radiation dose (6) | 91-134 | 102-124 | 462-480 |
| (unit: CPM) | | | |

### Notes

(1) and (2) Same as (1) and (2) in Example 1
(3) HYK talc of Fuji Talc Industrial Chemical Co.. Ltd
(4) ESCALON 800 of Sankyo Seifun Co., Ltd
(5) Same as (3) of Example 2
   Measurement site: Precincts of Shichishanomiya Shrine (Watari, Fukushima City) Northwest and 60 km from Fukushima No. 1 Nuclear Power Plant
   Measurement date: Nov. 22, 2012
(6) A value obtained by subtracting 50 CPM (background value).

It is clear from the results of Table 4-3 that the placement of sand iron or barite between two rubber sheets of the present invention can shield a radiation by more than about 70% (CPM unit). Sand iron placed between rubber sheets can shield a radiation by using a rubber. This is advantageous because it is unnecessary to produce iron from iron ore in a blast furnace and sand iron per se can be used as a shielding material. It is advantageous that a sand iron powder or a barite powder placed between two rubbers can reduce a radiation emitted around from daily living environment.

### Examples 6 and 7, Comparative Example 6

100 parts by weight of natural rubber, 100 parts by weight of barite, 100 parts by weight of calcium bicarbonate and 5 parts by weight of a naphthenic oil were kneaded to produce a rubber sheet of 8 mm in thickness (see Table 5-1). This rubber sheet was used as a protective sheet for intermediate material. The intermediate material was a mixture of sand iron and barite (see Table 5-2) and had a thickness of 18 mm. In Example 6 and 7, a combination of two rubber sheets and an intermediate material placed between them was placed on an earth surface and a radiation measurement was made thereon. In Comparative Example 6, a radiation measurement was made without using the combination. The measurement results of radiation dose are shown in Table 5-3.

**Table 5-1**

| | Formulation f rubber sheet |
|---|---|
| Natural rubber #3 | 100 parts by weight |
| Barite (1) | 100 parts by weight |
| Calcium bicarbonate (2) | 100 parts by weight |
| Naphthenic oil (3) | 5 parts by weight |

### Notes

(1) Same as (2) of Example 1
(2) Same as (4) of Example 4
(3) SUNTHENE 415 of Japan Sun Oil Co.

**Table 5-2**

| Intermediate material placed between two rubber sheets | | |
|---|---|---|
| | Example 6 | Example 7 |
| Sand iron (1) | 75% by weight | 25% by weight |
| Barite (2) | 25% by weight | 75% by weight |

**Table 5-3**

| | Example 6 (4) | Example 7 (5) | Comparative Example 6 (6) |
|---|---|---|---|
| Measured radiation dose (3) | 80∼100 | 121-145 | 462-480 |
| (unit: CPM) | | | |

### Notes

(1) Same as (3) of Example 2
(2) Same as (2) of Example 1
(3) A value obtained by subtracting 50 CPM (background value).
(4), (5) and (6)
   Measurement site: Precincts of Shichishanomiya Shrine (Watari, Fukushima City) Northwest and 60 km from Fukushima No. 1 Nuclear Power Plant
   Measurement date: Nov. 22, 2012

It is clear from the test results that a mixture of sand iron and barite placed between two rubber sheets of the present invention is highly effective in shielding the radiation emitted from an earth surface.

### Example 8, Comparative Example 7

70 parts by weight of butyl rubber, 30 parts by weight of ethylene-propylene rubber, and zeolite and barite of amounts shown in Table 6-1 were compounded0 using an open roll to produce a rubber sheet of 18 mm in thickness. In Example 8, this rubber sheet was placed on an earth surface as a shielding material and a radiation dose measurement was made thereon. In Comparative Example 7, a radiation dose measurement was made directly on an earth surface. The measurement results are shown in Table 6-2.

**Table 6-1**

| | Formulation of rubber sheet |
|---|---|
| Butyl 268 (1) | 70 parts by weight |
| EP 33 (2) | 30 parts by weight |
| Zeolite (3) | 200 parts by weight |
| Barite (4) | 50 parts by weight |

**Table 6-2**

| | Example 8 | Comparative Example 7 |
|---|---|---|
| Measured radiation dose (5) (unit: CPM) | 125-136 | 264∼287 |

### Notes

(1) Same as (1) of Example 1
(2) Same as (2) of Example 2
(3) Same as (1) of Example 3
(4) Same as (2) of Example 1
(5) A value obtained by subtracting 50 CPM (background value).
   Measurement site: Precincts of Sumiyoshi Shrine (Sumiyoshi, Oonami, Fukushima City) Northwest and 55 km from Fukushima No. 1 Nuclear Power Plant
   Measurement date: Nov. 22, 2012

It is clear from the measurement results that the unvulcanized rubber sheet containing butyl rubber, EPDM, zeolite and barite shielded the radiation dose emitted from earth surface, by about 50% (CPM unit).

### Example 9-1, Comparative Examples 8∼10

A mixture of sand iron and barite, having a weight ratio shown in Table 7-1 was placed in a thickness of 18 mm between two rubber sheets each of the same formulation as shown in Example 6 and a thickness of 9 mm. In Example 9-1, this combined shielding material was placed on an earth surface and a radiation dose was measured thereon in µSv/H unit. In Comparative Examples 8 to 10, the combined shielding material was not used. The measurements results are shown in Table 7-2 (Example 9-1) and Table 7-3 (Comparative Examples 8 to 10).

The measurement in Comparative Example 8 was made at the same position as in Example 9-1.

The measurement in Comparative Example 9 was made at the same position as in Example 9-1 but at a height of 70 cm (about the waist height of walking average Japanese) with the measurement apparatus directed perpendicularly to the earth surface.

The measurement in Comparative Example 10 was made at a other site which was considered to be substantially not contaminated, for comparison with Example 9-1.

**Table 7-1**

| | Mixing ratio |
|---|---|
| Sand iron (1) | 75 % by weight |
| Barite (2) | 25 % by weight |

### Notes

(1) Same as (3) of Example 2
(2) Same as (2) of Example 1

**Table 7-2**

| | Example 9-1 |
|---|---|
| Measured radiation dose (unit: µSv/H) | 0.22~0.35 |

**Table 7-3**

| | Comparative Example 8 (3) | Comparative Example 9 (4) | Comparative Example 10 (5) |
|---|---|---|---|
| Measured radiation dose (unit: µSv/H) | 0.48~0.55 | 0.48~0.54 | 0.06~0.10 |

(3) and (4)
   Measurement site: Precincts of Sumiyoshi Shrine (Sumiyoshi, Oonami, Fukushima City) Northwest and 55 km from Fukushima No. 1 Nuclear power plant
   Measurement date: Nov. 22, 2012
(5) Measurement site: Precincts of Kasuga Shrine (Nishimachi, Ina City, Nagano prefecture) Southwest and 330 km from Fukushima No. 1 Nuclear Power Plant
   Measurement date: Nov. 30, 2012

It is clear from the radiation doses of Example 9-1 and Comparative Example 8 that the combined shielding material reduced a radiation dose by about 40% (µSv/H unit). It is clear from the measured radiation doses of Comparative Example 8 and Comparative 9 that the radiation doses of earth surface and the waist height of walking average Japanese are about the same. This indicates that the radiation dose is about the same at the earth surface and at the space through which people walk in daily life. The radiation dose of Comparative Example 10 is a value of a site which is considered to be substantially not contaminated. For confirmation, in Comparative Example 11 shown later, a measurement was conducted at a different site and the result is shown in Table 11. It can be said from the comparison of these Example and Comparative Examples that the radiation doses of Comparative Examples 10 and 11 are radiation does which should be targeted in decontamination of living space.

**Table 7-4**

| | Comparative Example 11 (1) |
|---|---|
| Measured radiation dose (unit: µSv/H) | 0.06∼0.10 |

(1) Measurement site: Precincts of Wasi Shrine (Oowadamachi, Minuma Ward, Saitama City) South-southwest and 210 km from Fukushima No. 1 Nuclear Power Plant
   Measurement date: Dec. 8, 2012

### Example 9-2, Comparative Example 12

Kneading was made in the formulation of Table 8-1 using an open roll, to produce a rubber sheet of 13 mm in thickness. In Example 9-2, this rubber sheet was placed on an earth surface and a measurement was made thereon with the measurement surface directed perpendicularly to the earth surface. In Comparative Example 12, a measurement was made on an earth surface, using no rubber sheet. The measurement results are shown in Table 8-2.

**Table 8-1**

| | Formulation of rubber sheet |
|---|---|
| Butyl 268 (1) | 50 parts by weight |
| EP 33 (2) | 50 parts by weight |
| Barite (3) | 100 parts by weight |
| Sand iron (4) | 100 parts by weight |
| Paraffinic oil (5) | 5 parts by weight |

### Notes

(1) Same as (1) of Example 1
(2) Same as (2) of Example 2
(3) Same as (2) of Example 1
(4) Same as (3) of Example 2
(5) SUNPAR 150 produced by Japan Sun Oil Company

**Table 8-2**

| | | Example 9-2 (1) | Comparative Example 12 (2) |
|---|---|---|---|
| Measured radiation dose (3) | | | |
| | Unit: CPM | 81~92 | 360-417 |
| | Unit: µSv/H | 0.34~0.45 | 0.49~0.60 |

### Notes

(1) and (2)
   Measurement site: Precincts of Sumiyoshi Shrine (Sumiyoshi, Oonami, Fukushima City) Northwest and 55 km from Fukushima No. 1 Nuclear Power Plant
      Measurement date: Dec. 6, 2012
(3) In CPM unit, 50 CPM (background value) was subtracted. In µSv/H unit, the value of measurement apparatus was used per se.

It is clear from the results of Table 8-2 that the rubber sheet in which sand iron and barite had been filled into a rubber mixture of butyl rubber and EPDM, reduced a radiation emitted from an earth surface, to a considerably low level.

### Examples 10 to 12

The adequacy of the background CPM value (50 CPM) described in the specification of the measurement apparatus was investigated. The level of the background µSv/H value of the measurement apparatus, i.e. the µSv/H level considered to be no contamination was examined. Measurements of CPM value and µSv/H value were conducted at three different sites and the results are shown in Table 9. Such manner is employed as a ground for objective judgment of presence of effect of the present invention in the Examples.

**Table 9**

| Measurement unit | Example 10 (1) | Example 11 (2) | Example 12 (3) |
|---|---|---|---|
| µSv/H | 0.05∼0.09 | 0.07∼0.13 | 1.10∼1.2 |
| CPM | 46-56 | 52-64 | 821-864 |

### Notes

(1) Measurement site: Precincts of Nanguu Shrine (Kinoshita, Minowa Cho, Nagano Prefecture) Southwest and 322 km from Fukushima No.1 Nuclear Power Plant
   Measurement date: Nov. 30, 2012
(2) Measurement site: Precincts of Sakashita Shrine (Ina, Ina City, Nagano Prefecture) Southwest and 330 km from Fukushima No.1 Nuclear Power Plant
   Measurement date: Nov. 30, 2012
(3) Measurement site: Precincts of Kasuga Shrine (Fukushima City, Fukushima Prefecture) Northwest and 58 km from Fukushima No.1 Nuclear Power Plant
   Measurement date: Dec. 6, 2012

The 50 CPM (which is the background CPM value described in the specification of the measurement apparatus) can be judged to be exact, viewed from the measurement values of Example 10 and Example 11. The measurements sites of Example 10 and Example 11 are considered to be sites of no contamination, viewed from the measured CPM values. With respect to the µSv/H value, 0.05 or smaller is judged to be the background value, viewed from the measured µSv/H values.

On Oct. 13, 2011, the radiation dose of earth surface was measured at several positions of a farm road of Kuroishi City, Aomori Prefecture which was north-northwest and 360 km from Fukushima No. 1 Nuclear Power Plant. The measured values were 0.03 µSv/H. It can be concluded from the measured values that the background µSv/H value is 0 03~0.04 in Japan.

As to Example 12, the true radiation dose caused by contamination is concluded to be 1.06~1.16 µSv/H (0.04 µSv/H was subtracted from 1.10~1.2 µSv/H) and 771∼814 CPM (50 CPM was subtracted from 821-864 CPM). As to the µSv/H values which appear later, measured values per se are shown, as in above.

### Example 13, Comparative Example 13

100 parts by weight of natural rubber was compounded with barite, sand iron and a naphthenic oil in a formulation Shown in Table 10-1, using an open roll. The compound obtained was subjected to sheeting to produce a rubber sheet of 10 mm in thickness. The rubber sheet was placed on an earth surface and a radiation dose was measured thereon, in Example 13. In Comparative Example 13, a measurement was conducted on the same position of earth surface, using no rubber sheet. The measurement results are shown in Table 10-2.

**Table 10-1**

| | Formulation of rubber sheet |
|---|---|
| Natural rubber #3 | 100 parts by weight |
| Barite (1) | 100 parts by weight |
| Sand iron (2) | 100 parts by weight |
| Naphthenic oil (3) | 5 parts by weight |

### Notes

(1) Same as (2) of Example 1
(2) Same as (3) of Example 2
(3) SUNTHENE 415 produced by Japan Sun Oil Company

**Table 10-2**

| measurement unit | Example 13 (1) | Comparative Example 13 (2) |
|---|---|---|
| CPM | 94-154 | 211~245 |
| µSv/H | 0.32∼0.34 | 0.43~0.51 |

### Notes

(1) and (2)
   Measurement site: Precincts of Sumiyoshi Shrine (Sumiyoshi, Oonami, Fukushima City) Northwest and 55 km from Fukushima No. 1 Nuclear Power Plant
   Measurement date Dec 6, 2012

It is clear from the measurement results that an unvulcanized natural rubber sheet containing barite and sand iron shields a radiation emitted from an earth surface

100 parts by weight of butyl rubber was compounded with barite, sand iron and a Paraffinic oil in a formulation Shown in Table 11-1, using an open roll The compound obtained was subjected to sheeting to produce a rubber sheet of 13 mm in thickness. The rubber sheet was placed on an earth surface and a radiation dose was measured thereon, in Example 14. In Comparative Example 14, a measurement was conducted on the same position of earth surface using no rubber sheet. The measurement results are shown in Table 11-2.

**Table 11-1**

| | Formulation of rubber sheet |
|---|---|
| Butyl 268 (1) | 70 parts by weight |
| EP 33 (2) | 30 parts by weight |
| Sand iron (3) | 100 parts by weight |
| Barite (4) | 100 parts by weight |
| Paraffinic oil (5) | 5 parts by weight |

### Notes

(1) same as (1) of Example 1
(2) Same as (2) of Example 2
(3) Same as (3) of Example 2
(4) Same as (2) of Example 1
(5) Same as (5) of Example 10

**Table 11-2**

| Measurement unit | Example 14 (1) | Comparative Example 14 (2) |
|---|---|---|
| CPM | 138-156 | 464-536 |
| µSv/H | 0.41~0.45 | 0.59~0.65 |

### Notes

(1) and (2)
   Measurement site: Precincts of Sumiyoshi Shrine (Sumiyoshi, Oonami, Fukushima City) Northwest and 55 km from Fukushima No. 1 Nuclear Power Plant
   Measurement date: Dec. 6, 2012

It is clear from the measurement results that an unvulcanized butyl rubber sheet containing barite and sand iron shields a radiation emitted from an earth surface.

### Example 15, Comparative Example 15

100 parts by weight of butyl rubber was compounded with barite and carbon black in a formulation Shown in Table 12-1, using an open roll. The compound obtained was subjected to sheeting to produce a rubber sheet of 14 mm in thickness. The rubber sheet was placed on an earth surface and a radiation dose was measured thereon, in Example 15. In Comparative Example 15, a measurement was conducted on the same position of earth surface, using no rubber sheet. The measurement results are shown in Table 12-2.

**Table 12-1**

| | Formulation of rubber sheet |
|---|---|
| Butyl 268 (1) | 100 parts by weight |
| Barite (2) | 250 parts by weight |
| Asahi #50 (3) | 10 parts by weight |

### Notes

(1) Same as (1) of Example 1
(2) Same as (2) of Example 1
(3) Carbon black produced by Asahi Carbon Co., Ltd.

**Table 12-2**

| Measurement unit | Example 15 (1) | Comparative Example 15 (2) |
|---|---|---|
| CPM | 93-98 | 170∼193 |
| µSv/H | 0.12~0.18 | 0.24~0.30 |

### Notes

(1) and (2)
   Measurement site: Precincts of Tango Shrine (Waseda, Misato City, Saitama Prefecture) South-southwest and 203 km from Fukushima No. 1 Nuclear Power Plant
   Measurement date: Dec. 11, 2012

It is clear from the measurement results that a rubber sheet of 14 mm in thickness obtained by kneading butyl rubber, barite and carbon black shielded a radiation by 50% in CPM unit and by a radiation dose of 0.1 in µSv/H unit.

## Claims

1. A natural rubber sheet as a shielding material, to be placed on a radioactive substance-contaminated earth surface or underground to shield the radiation of beta rays and gamma rays emitted from the earth surface or underground, which rubber sheet is obtained by compounding or mixing a composition containing natural rubber and also containing sand iron, barium sulfate, zeolite or a mixture of at least two of these members and which rubber sheet contains neither vulcanizing agent nor vulcanization accelerator.

2. A synthetic rubber sheet as a shielding material, to be placed on a radioactive substance-contaminated earth surface or underground to shield the radiation of beta rays and gamma rays emitted from the earth surface or underground, which rubber sheet is obtained by compounding or mixing a composition containing a synthetic rubber and also containing sand iron, barium sulfate, zeolite or a mixture of at least two of these members and which rubber sheet contains neither vulcanizing agent nor vulcanization accelerator.

3. A synthetic rubber sheet according to Claim 2, wherein the synthetic rubber is polyisoprene rubber, isoprene-isobutylene rubber, ethylene-propylene rubber, styrene-butadiene rubber or a mixture of at least two of these members.

4. A natural rubber sheet according to Claim 1, which is obtained by compounding or mixing a composition containing 100 parts by weight of natural rubber and 100 to 300 parts by weight of sand iron, barium sulfate, zeolite or a mixture of at least two of these members.

5. A rubber sheet as a shielding material, to be placed on a radioactive substance-contaminated earth surface or underground to shield the radiation of beta rays and gamma rays emitted from the earth surface or underground, which rubber sheet is obtained by compounding or mixing a composition containing
total 100 parts by weight of a rubber component obtained by mixing 50 parts by weight to less than 100 parts by weight of natural rubber and 0 part by weight to less than 50 parts by weight of at least one synthetic rubber member selected from the synthetic rubbers set forth in Claim 3, and
100 parts by weight to 300 parts by weight of sand iron, barium sulfate, zeolite or at least two of these members, and which rubber sheet contains neither vulcanizing agent nor vulcanization accelerator.

6. l A synthetic rubber sheet according to Claim 2, which is obtained by compounding or mixing a composition containing
100 parts by weight of a synthetic rubber which is at least one synthetic rubber selected from the synthetic rubbers set forth in Claim 3, and
100 parts by weight to 300 parts by weight of sand iron, barium sulfate, zeolite or at least two of these members.

7. A rubber sheet according to Claim 1, 2, 3, 4, 5 or 6 wherein the sand iron is a fine powder of titanomagnetite, ferrotitanium ore, or a mixture thereof.

8. A rubber sheet according to Claim 1, 2, 3, 4, 5, 6 or 7 wherein the barium sulfate is a barite powder obtained by grinding barite, precipitated barium sulfate , or a mixture thereof.

9. A rubber sheet according to Claim 1, 2, 3, 4, 5, 6, 7 or 8 wherein the zeolite is hydrous aluminum silicate and is a powder of an ore mainly composed of mordenite zeolite, clinoptilolite zeolite, or a mixture thereof.

10. A rubber sheet according to any of Claims 1 to 9 which has a thickness of 3 mm to 35 mm.

11. A method for shielding a radiation of beta rays and gamma rays emitted from the radioactive substance-contaminated earth surface in the vicinity ot living environment, which comprises
preparing two rubber sheets set forth in any of Claims 1 to 9,
placing, between the two rubber sheets, a layer of sand iron, barium sulfate, zeolite, or a mixture of at least two of these members, to prepare a shielding layer, and
reversing the position of the soil of earth surface contaminated with a radioactive substance and the position of the soil beneath the earth surface, of lower radiation dose, in such a way that the shielding layer is placed between the new upper-position soil of lower radiation dose and the new lower-position soil of higher radiation dose.

12. A method according to Claim 11, wherein the layer of sand iron, barium sulfate, zeolite or a mixture of at least two of these members, placed between the two rubber sheets has a thickness of 10 mm to 100 mm.

13. A method for shielding a radiation of beta rays and gamma rays emitted from a radioactive substance-contaminated earth surface in the vicinity of living environment, which comprises
preparing two rubber sheets each containing neither vulcanizing agent nor vulcanization accelerator, obtained by kneading or mixing a composition which contains 100 parts by weight of natural rubber, at least one kind of synthetic rubber set forth in Claim 3, or a mixed rubber of natural rubber and at least one kind of synthetic rubber set forth in Claim 3, (1) more than 0 part by weight to 100 parts by weight or less of sand iron, barium sulfate, zeolite or at least two of these members, and (2) 100 parts by weight to 300 parts by weight of calcium carbonate, clay, talc, mica, or at least two of these members,
placing, between the two rubber sheets, a layer of sand iron, barium sulfate, zeolite, or a mixture of at least two of these members, to prepare a shielding layer, and
reversing the position of the soil of earth surface contaminated with a radioactive substance and the position of the soil beneath the earth surface, of lower radiation dose, in such a way that the shielding layer is placed between the new upper-position soil of lower radiation dose and the new lower-position soil of higher radiation dose.

14. A method according to Claim 13, wherein the rubber sheet has a thickness of 3 mm to 35 mm.

15. A rubber sheet according to any of Claims 1 to 14, wherein neither rubber-vulcanizing agent selected from sulfur, sulfur compounds, organic peroxides, phenolic resins and nitroso compounds, nor rubber vulcanization accelerator selected from guanidine compounds, aldehyde compounds, thiazole compounds and thiuram compounds is not used in compounding or mixing.
